# EUROPEAN PATENT APPLICATION

(11) **EP 2 026 075 A1**
(43) Date of publication of application: **18.02.2009**
(21) Application number: 07744229.1
(22) Date of filing: 28.05.2007
(51) Int. Cl.: G01N 35/08, G01N 37/00

(54) **MICROCHIP INSPECTION DEVICE**

(30) Priority: 06.06.2006 JP 2006157001
(71) Applicant: Konica Minolta Medical & Graphic, Inc., Hino-shi, Tokyo 191-8511 (JP)
(72) Inventor: SAWAZUMI, Tsuneo, Hino-shi, Tokyo 191-8511 (JP); KITAMURA, Mitsuharu, Hino-shi, Tokyo 191-8511 (JP)
(74) Representative: Roberts, Mark Peter
(86) International application number: PCT/JP2007/060795
(87) International publication number: WO 2007/142061

(57) **Abstract**

A microchip inspecting device with a temperature control function capable of performing accurate inspection. The inspection device comprises a microchip containing part in which microchips having a part to be detected and a part to be temperature-adjusted is contained, a detection section disposed corresponding to the part to be detected of the microchip contained in the microchip containing part, a temperature adjusting section disposed corresponding to the part to be temperature-adjusted of the microchip contained in the microchip containing part, and a control section for reducing the power of the temperature adjusting section when the part to be detected the microchip contained in the microchip containing part is detected by the detection section.

## Description

### FIELD OF THE INVENTION

The present invention relates to a microchip inspection device.

### BACKGROUND OF THE INVENTION

In recent years, there is watched Micro Total Analysis System (µTAS) wherein plural solutions are mixed to react to each other on a microchip on which fine channels are processed on integrated basis, and the state of the reaction is detected to make an analysis.

The µ TAS has merits including that an amount of samples is less, a reaction time is short and an amount of waste is less. When the µ TAS is used in a medical field, it is possible to reduce a burden for a patient by decreasing an amount of specimens (blood, urine and wiping liquid), and it is possible to reduce cost for inspection by reducing an amount of reagents. Further, a small quantity of specimens or reagents or reagents makes reaction time to be shortened greatly, and it makes promotion of efficiency for inspection to be realized. In addition, since an apparatus is small, it can also be installed in a small medical institution, to carry out inspection promptly, without being choosy about a place.

In the inspection that employs a microchip, temperature control for the microchip is frequently carried out, because reagents are cooled, and heating is required for promoting reaction between a specimen and a reagent.

In Patent Document 1, there is described a temperature regulator for a microchip that adjusts temperature for each of plural areas in a microchip.

Further, as a method to detect a reaction on a microchip, there is known a method wherein light is applied to a reaction portion of the microchip, and its transmitted light or reflected light is detected.

In Patent Document 2, there is described a microchip inspection device wherein light is applied to a reaction detection channel (a portion to be detected) on the microchip, and the state of reaction on the reaction detection channel is detected by receiving light coming from the reaction detection channel.
Patent Document 1: Unexamined Japanese Patent Application Publication No. 2005-214782
Patent Document 2: Unexamined Japanese Patent Application Publication No. 2003-4752

### DISCLOSURE OF THE INVENTION

### PROBLEMS TO BE SOLVED BY THE INVENTION

For the purpose of detecting accurately in the microchip inspection device equipped with a function of temperature control, it is necessary to arrange so that detection is not affected by noise such as electric noise caused by temperature adjustment. It is further necessary to control temperature accurately for a place for storage of reagents on the microchip and for a place of reaction between a specimen and a reagent, and to cause a mixture of reagents and a reaction between a specimen and a reagent to be carried out normally.

The invention has been achieved based on the requirements mentioned above, and its objective is to provide a microchip inspection device capable of detecting accurately in the microchip inspection device equipped with a function of temperature control.

### MEASURES TO SOLVE THE PROBLEMS

An inspection device employing a microchip of the invention is characterized to have therein a microchip containing part in which microchips having a part to be detected and a part to be a detected in terms of temperature are contained, a detection section provided corresponding to the part to be detected of the microchip contained in the aforesaid microchip containing part, a temperature adjusting section provided corresponding to the part to be temperature-adjusted of the microchip contained in the microchip containing part and a control section for reducing the power of the temperature adjusting section when the part to be detected of the microchip contained in the microchip containing part.

Further, the inspection device employing the microchip of the invention is characterized to have therein a microchip containing part in which microchips having a part to be detected and a part to be a detected in terms of temperature are contained, a detection section provided corresponding to the part to be detected of the microchip contained in the aforesaid microchip containing part, a temperature adjusting section provided corresponding to the part to be temperature-adjusted of the microchip contained in the microchip containing part, the first temperature sensor that is provided corresponding to the temperature adjusting section on the same side of the temperature adjusting section for the microchip contained in the microchip containing part, and detects a temperature on a surface on one side of the microchip contained in the microchip containing part, a control section that controls a temperature of the temperature adjusting section based on output of the first temperature sensor, the second temperature sensor that is provided corresponding to the temperature adjusting section on the opposite side of the temperature adjusting section for the microchip contained in the microchip containing part, and detects a temperature on a surface on the other side of the microchip contained in the microchip containing part, and a control section that outputs signals indicating whether the detection of the part to be detected of the microchip contained in the microchip containing part conducted by the detection section is abnormal or not, based on output values at least of the second temperature sensor.

### EFFECT OF THE INVENTION

In the invention, when a level of temperature control output is reduced in the case of detection, noises such as an electric noise that is increased by a raise in output level for temperature control and a fluctuating noise caused by convection of a liquid in a fine channel, which makes it possible to detect accurately.

Further, in the invention, it is possible to detect an occasion wherein reactions are not normal, which eliminates a fear that abnormal detected values are not noticed to be abnormal even when they are outputted, and are judged to be normal detected values by mistake, resulting in accurate detection.

### BRIEF DESCRIPTION OF THE DRAWINGS

Fig. 1 is an outline drawing of an inspection device employing a microchip relating to the present embodiment.
Fig. 2 is a schematic diagram of an inspection device employing a microchip relating to the present embodiment.
Fig. 3 is a schematic diagram of a microchip relating to the present embodiment.
Fig. 4 is a diagram showing primary portions of a control configuration of an inspection device that employs a microchip relating to the present embodiment.
Fig. 5 is a flow chart of temperature control relating to the present embodiment.

### EXPLANATION OF SYMBOLS

- 1.: Microchip
- 4.: Photodetector section
- 31.: Peltier element
- 32.: Heater
- 33, 34.: Temperature sensor for feedback
- 35, 36.: Temperature sensor for monitoring
- 80.: Inspection device
- 90.: CPU
- 94.: Nonvolatile memory
- 111.: Part to be detected
- 120.: Reagent containing section
- 121.: Specimen containing section
- 122.: Positive control containing section
- 123.: Negative control containing section
- 124,: 125, 126. Reaction section

### PREFERRED EMBODIMENT OF THE INVENTION

In the present embodiment, there is shown an occasion wherein a specimen and a reagent are caused to react on a microchip, as in DNA chip that detects a reaction of specified DNA, as an example. However, the invention is not limited to this, and it can also be applied to the occasion where at least two types of fluids are mixed on the microchip.

### (Device structure)

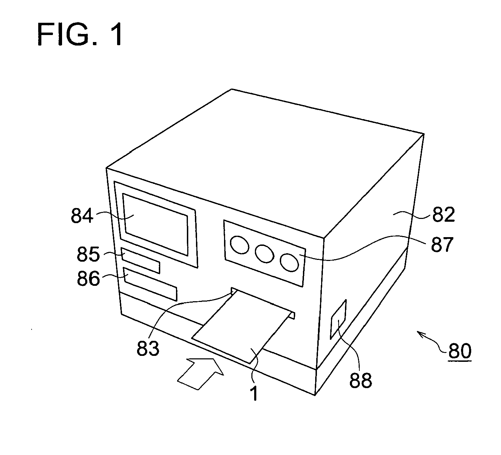

Fig. 1 is an outline drawing of inspection device 80 employing a microchip relating to the present embodiment. The inspection device 80 is a device wherein a specimen and a reagent which are injected in microchip 1 are caused to react automatically, and results of the reaction are outputted automatically.

In casing 82 of the inspection device 80, there are provided insertion opening 83 through which microchip 1 is inserted in the device, display section 84, memory card slot 85, print output port 86, operation panel 87 and external input terminal 88.

A person in charge inserts microchip 1 in the direction of an arrow in Fig. 1, and operates operation panel 87 to cause an inspection to be started. Inside the inspection device 80, an inspection of a reaction in microchip 1 is automatically made, and a result of the inspection is displayed on display section 84 after the inspection is completed. The result of the inspection can be outputted as a print from the print output port 86, through operations of the operation panel 87, or it can be stored in a memory card inserted in the memory card slot 85. It is further possible to preserve data in a personal computer from the external input terminal 88 by using, for example, a LAN cable. After completion of the inspection, the person in charge takes out the microchip 1 from the insertion opening 83.

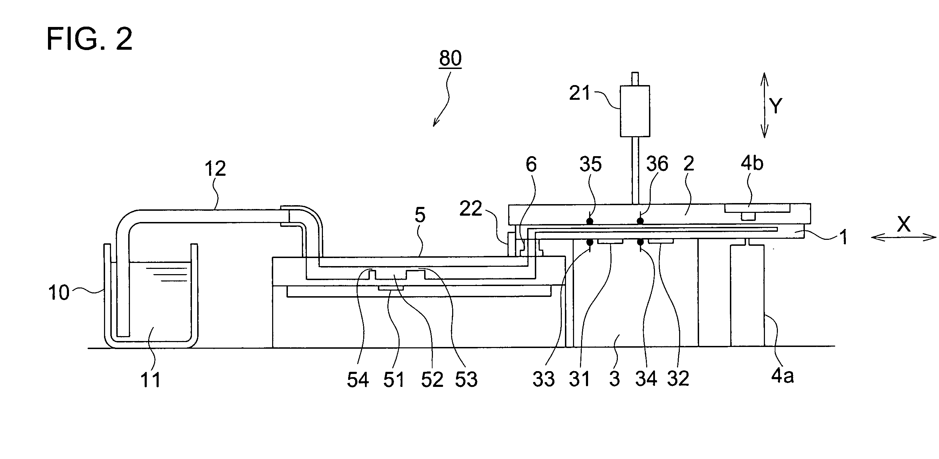

Fig. 2 is a schematic diagram of inspection device 80 employing a microchip relating to the present embodiment. Fig. 2 shows a situation where a microchip is inserted through the insertion opening 83 shown in Fig. 1 and setting is completed.

The inspection device 80 is provided with a driving liquid tank 10 in which driving liquid 11 for sending a specimen and a reagent both injected in microchip 1 in advance is reserved, pump 5 for supplying driving liquid 11 to microchip 1, packing 6 that connects the pump 5 to microchip 1 so that driving liquid 11 may not leak, temperature control unit 3 that controls temperature on a necessary portion of microchip 1, chip pressure plate 2 that brings microchip 1 into close contact with the temperature control unit 3 and the packing 6 so that the microchip 1 may not slip off, pressure plate driving section 21 that causes the chip pressure plate 2 to go up and down, regulating member 22 that positions microchip 1 accurately for the pump 5 and with photodetector section 4 that detects the state of reaction between a specimen and a reagent in microchip 1.

In the initial state, the chip pressure plate 2 is retreated upward to be higher than a position shown in Fig. 2. Owing to this, microchip 1 can be inserted and drawn out in the direction of arrow X, and a person in charge of inspection inserts microchip 1 through the insertion opening 83 (see Fig. 1) until the microchip 1 hits the regulating member 22. After that, the chip pressure plate 2 is caused by the pressure plate driving section 21 to go down and hits the microchip 1, thus, a bottom surface of the microchip 1 is brought into close contact with temperature control unit 3 and packing 6.

The temperature control unit 3 is equipped with Peltier element 31 and heater 32 on a surface that faces microchip 1, and when the microchip 1 is set on inspection device 80, the Peltier element 31 and the heater 32 are brought into close contact with the microchip 1. A portion containing reagents is cooled by the Peltier element 31 so that the reagents may not be denatured, and a portion where a specimen and a reagent react to each other is heated by the heater 32 so that the reaction may be accelerated.

In the vicinity of each of Peltier element 31 and heater 32, there are provided temperature sensors 33 and 34 for feedback, and temperature control for the Peltier element 31 and the heater 32 is carried out based on these temperature sensors 33 and 34 for feedback. The temperature sensor for feedback corresponds to the first temperature sensor relating to the invention.

On the side opposite to temperature sensors 33 and 34 for feedback with microchip 1 that is sandwiched between the aforesaid opposite side and the side of the temperature sensors, there are provided temperature sensors 35 and 36 for monitoring which measure temperatures on the surface opposite to the surface measured by temperature sensors 33 and 34 for feedback of microchip 1. The temperature sensor for monitoring corresponds to the second temperature sensor relating to the invention.

Photodetector section 4 is composed of light-emitting section 4a and light-receiving section 4b, and microchip 1 is irradiated by light emitted from the light-emitting section 4a, and light which has transmitted through the microchip 1 is detected by the light-receiving section 4b. The light-receiving section 4b is provided integrally inside chip pressure plate 2. A plurality of each of light-emitting section 4a and light-receiving section 4b are provided so that they may face parts to be detected 111a - 111b of microchip 1 which will be described later.

The pump 5 is composed of pump chamber 52, piezoelectric element 51 that changes a volume of the pump chamber 52, first narrowed channel 53 located at the position on the microchip 1 side of the pump chamber 52 and of second narrowed channel 54 located at the position on the driving liquid tank 10 side of the pump chamber. Each of the first narrowed channel 53 and the second narrowed channel 54 is a narrowed and cramped channel, and a length of the first narrowed channel 53 is longer than that of the second narrowed channel 54.

When sending driving liquid 11 in the regular direction (direction toward microchip 1), piezoelectric element 51 is first driven so that a volume of pump chamber 52 may be reduced promptly. Then, a turbulent flow is generated in the second narrowed channel 54 that is a shorter narrowed channel, and channel resistance in the second narrowed channel 54 grows greater relatively, compared with the first narrowed channel 53 representing a longer narrowed channel. Due to this, driving liquid 11 in the pump chamber 52 is pushed out dominantly toward the first narrowed channel 53 to be sent. Next, piezoelectric element 51 is driven so that a volume of pump chamber 52 may be increased slowly. Then, with an increase of a volume of the pump chamber 52, driving liquid 11 flows in the pump chamber 52 from the first narrowed channel 53 and the second narrowed channel 54. In this case, channel resistance of the second narrowed channel 54 is smaller than that of the first narrowed channel 53 because the second narrowed channel 54 is shorter than the first narrowed channel 53, and thereby, the driving liquid 11 flows in the pump chamber 52 dominantly. When the aforesaid operations are repeated by the piezoelectric element 51, the driving liquid 11 is sent in the regular direction.

On the other hand, when sending driving liquid 11 in the opposite direction (direction toward driving liquid tank 10), piezoelectric element 51 is first driven so that a volume of pump chamber 52 may be reduced slowly. Then, channel resistance of the second narrowed channel 54 is smaller than that of the first narrowed channel 53 because the second narrowed channel 54 is shorter than the first narrowed channel 53. Owing to this, the driving liquid 11 in the pump chamber 52 is pushed out dominantly toward the second narrowed channel 54 to be sent. Next, the piezoelectric element 51 is driven so that a volume of pump chamber 52 may be increased promptly. Then, with an increase of a volume of the pump chamber 52, driving liquid 11 flows in the pump chamber 52 from the first narrowed channel 53 and the second narrowed channel 54. In this case, a turbulent flow is generated in the second narrowed channel 54 that is a shorter narrowed channel, and channel resistance in the second narrowed channel 54 grows greater relatively, compared with the first narrowed channel 53 representing a longer narrowed channel. Due to this, the driving liquid 11 flows in the pump chamber 52 dominantly from the first narrowed channel 53. When the aforesaid operations are repeated by the piezoelectric element 51, the driving liquid 11 is sent in the opposite direction.

### (Structure of microchip)

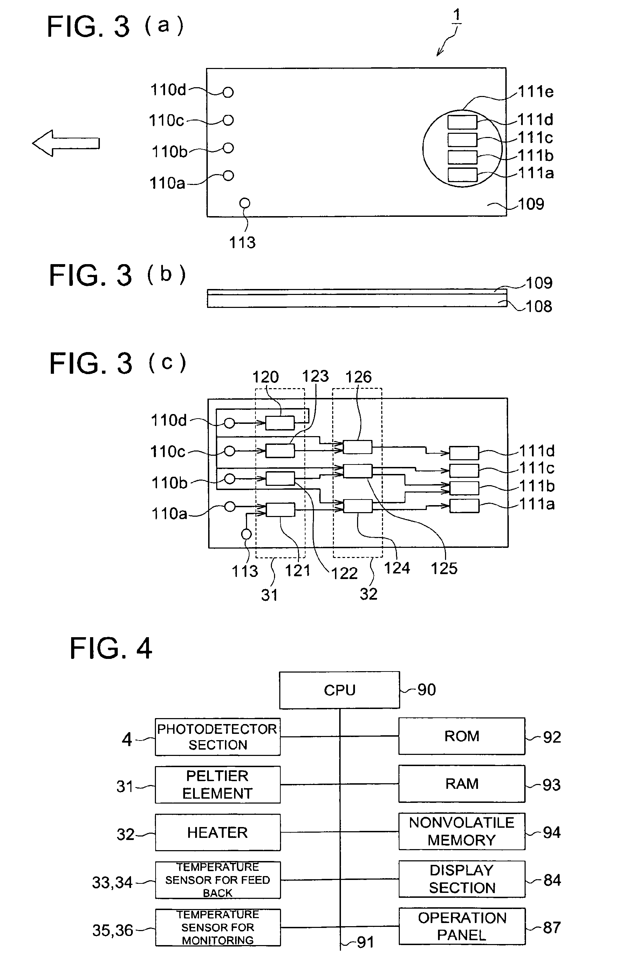

Fig. 3 is a schematic diagram of a microchip relating to the present embodiment. It shows an example of the structure, and the invention is not limited to this.

In Fig. 3 (a), an arrow mark shows an insertion direction for inserting microchip 1 in inspection device 80, and Fig. 3 (a) illustrates a surface that turns out to be a bottom surface of the microchip 1 when inserting the microchip 1. Fig. 3 (b) is a side view of the microchip 1.

As shown in Fig. 3 (b), the microchip 1 is composed of grooved substrate 108 and coated substrate 109 that covers the grooved substrate 108.

On the microchip 1 relating to the present embodiment, there are arranged a fine channel for mixing and reacting a specimen and a reagent on microchip 1 and a channel element. An example of the processing carried out in the microchip 1 by these fine channel and channel element will be explained as follows, referring to Fig. 3 (c). Fig. 3 (c) shows schematically the channel element and its cemented state under the condition where coated substrate 109 is removed in Fig. 3 (a).

On the fine channel, there are provided specimen containing section 121 that contains a specimen liquid, reagent containing section 120 that contains reagents, positive control containing section 122 that contains reagents for positive control and negative control containing section 123 that contains reagents for negative control. Each of reagent, positive control and negative control is contained in its each containing section in advance. Positive control reacts on reagents to show positiveness, and negative control reacts on reagents to show negativity, and they are for confirming whether accurate inspection was conducted or not.

Incidentally, Fig. 3 (c) shows schematically for simplifying the explanation, and, actually, it is also possible to conduct blending of reagents in the chip by containing plural reagents and diluting solutions in the chip.

Specimen injection section 113 is an injection section for injecting a specimen in microchip 1, and driving liquid injection portions 110a - 110d are injection sections for injecting driving liquid 11 in microchip 1.

First, prior to carrying out an inspection by microchip 1, a person in charge of inspection injects a specimen from specimen injection section 113 by using an injector. As shown in Fig. 3 (c), a specimen injected from specimen injection section 113 passes through a communicating fine channel, to be contained in specimen containing section 121.

Next, the microchip 1 into which a specimen is inserted is inserted by a person in charge of inspection into insertion opening 83, to be set as shown in Fig. 2.

Next, pump 5 shown in Fig. 2 is driven in the regular direction, following predetermined procedures instructed by CPU90 described later, and driving liquid 11 is injected from driving liquid injection portions 110a - 110d. Driving liquid 11 injected from driving liquid injection portion 110a passes through a communicated fine channel to push out a specimen contained in specimen containing section 121 to feed the specimen into reaction section 124. Driving liquid 11 injected from driving liquid injection portion 110b passes through a communicated fine channel to push out a reagent for positive control contained in positive control containing section 122 to feed the positive control to reaction section 125. Driving liquid 11 injected from driving liquid injection portion 110c passes through a communicated fine channel to push out a reagent for negative control contained in negative control containing section 123, to feed negative control into reaction section 126. Driving liquid 11 injected from driving liquid injection portion 110d passes through a communicated fine channel to push out a reagent contained in reagent containing section 120, to feed the reagent into the aforesaid reaction sections 124 - 126.

In the aforesaid way, a specimen and a reagent join each other in reaction section 124, positive control and a reagent join each other in reaction section 125 and negative control and a reagent join each other in reaction section 126.

In this case, reagent containing section 120, specimen containing section 121, positive control containing section 122 and negative control containing section 123 are positioned to face Peltier element 31 of inspection device 80, and are cooled so that they may not be denatured. Further, reaction sections 124 - 126 are positioned to face heater 32 of inspection device 80, and they are heated so that reaction may be accelerated.

After that, a part of a mixed liquid of a specimen and a reagent which have joined in reaction section 124 and a part of a mixed liquid of positive control and a reagent which have joined in reaction section 125 are sent to part to be detected 111b. A part of a mixed liquid of positive control and a reagent which have joined in reaction section 125 is sent to part to be detected 111c. A mixed liquid of negative control and a reagent which have joined in reaction section 126 is sent to part to be detected 111d.

Window 111e of the part to be detected and parts to be detected 111a - 111d are provided to detect reaction of each mixed liquid optically, and they are made of materials such as transparent glass or resins.

### (Control configuration)

Fig. 4 is a diagram showing primary portions of a control configuration of an inspection device that employs a microchip relating to the present embodiment. Around CPU 90 that conducts control for inspection device 80 following a program, there are provided ROM 92, RAM 93, nonvolatile memory 94, photodetector section 4, temperature sensors 33 and 34 for feedback, temperature sensors 35 and 36 for monitoring, Peltier element 31, heater 32, operation panel 87 and display section 84, so that they may be connected each other through bus 91. Incidentally, constituent elements for the device which are not related directly to the control of the invention are omitted here.

ROM 92 stores various types of programs and data which are executed by CPU 90.

RAM 93 is utilized by CPU 90 as a work area, and it stores temporarily programs and data which are needed when CPU 90 executes control.

Nonvolatile memory 94 stores a target range value for comparing with results of detections by photodetector section 4 and with results of outputs from temperature sensors for monitoring 35 and 36.

Descriptions for photodetector section 4, temperature sensors 33 and 34 for feedback, temperature sensors 35 and 36 for monitoring, Peltier element 31, heater 32, operation panel 87 and display section 84 will be omitted here, because they were explained earlier.

### (Temperature control flow)

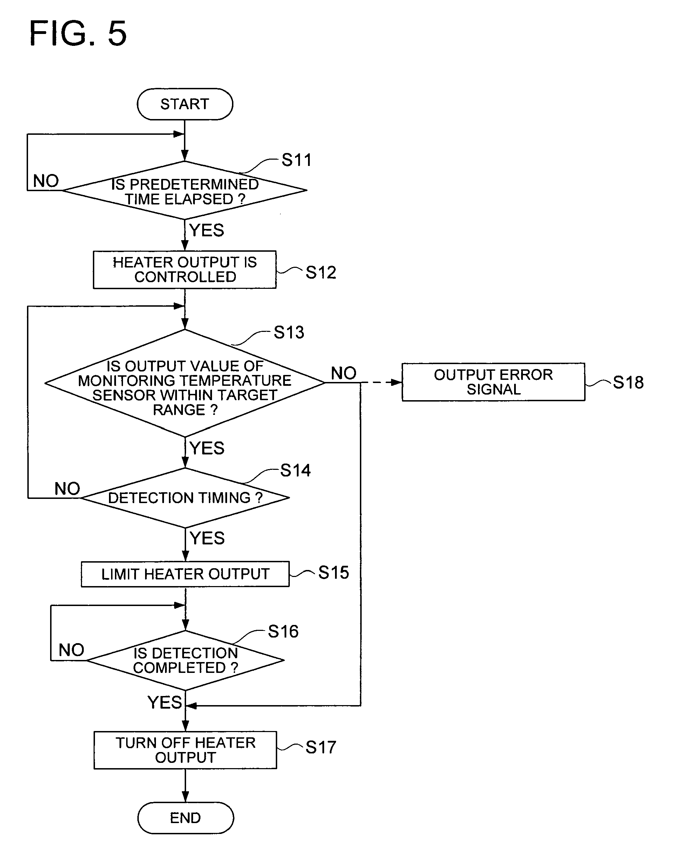

Fig. 5 is a flow chart of temperature control relating to the present embodiment. An example to conduct temperature control regulation for heater 32 based on temperature sensor for feedback 34 will be explained. Temperature control regulation is conducted when CPU 90 carries out processing based on temperature control regulation programs stored in ROM 92.

When the start of inspection is inputted by operation panel 87, a flow is started. Simultaneously with this, pump 5 is driven by CPU 90, and conveyance of driving liquid 11 is started. Specimens and various types of reagents both contained in microchips are pushed out by driving liquid 11 to start moving.

First, CPU 90 judges whether predetermined time has elapsed or not (step S11). The predetermined time is a period of time that is slightly shorter than a time period required by specimens and various types of reagents to arrive at reaction sections 124 - 126.

When the predetermined time is judged to have elapsed (step S11; Yes), CPU 90 causes output control of heater 32 to be started so that its temperature may turn out to be an established temperature, based on output of temperature sensor 34 for feedback (step S12). For example, output current of the heater 32 is controlled by PWM modulation. Owing to this, reaction sections 124 - 126 of microchip 1 can be maintained at established temperature.

When the predetermined time is judged not to have elapsed (step S11; No), CPU 90 waits until the predetermined time elapses. The reason for waiting is that the reagents need to be heated immediately after arriving at the reaction section without being heated until the reagents arrive at the reaction section, because various types of reagents tend to be denatured if they are heated. In the case of custody, microchips 1 are usually refrigerated so that reagents may not be denatured.

Next, CPU 90 judges whether the output value of temperature sensor for monitoring 36 is within a range of a target range value that is stored in nonvolatile memory 94 or not (step S13). The output value of the temperature sensor for monitoring 36 which is within a range of the target range value means that heater 32 and microchip 1 are in close contact sufficiently with each other and thermal conduction to reaction sections 124 - 126 is sufficiently carried out, namely, that normal reactions are conducted at reaction sections 124 - 126. In contrast to this, the output value of the temperature sensor for monitoring 36 which is not within the target range means that heater 32 and microchip 1 fail to be in close contact with each other, and thermal conduction is not conducted sufficiently, and temperature at reaction sections 124 - 126 is deviated from the target value, and normal reaction is not conducted. Close contact failure is caused by a warp of microchip 1, and by sticking of dust and soil to microchip 1. For preventing close contact failure, higher flatness of microchip 1 is preferable.

If an output value of temperature sensor for monitoring 36 is judged to be within a target range (step S13; Yes), CPU 90 judges whether that timing is suitable for photodetecting or not (step S14).

If an output value of temperature sensor for monitoring 36 is judged not to be within a target range (step S13; No), a flow advances to step S17, and CPU 90 turns off output of heater 32. Further, CPU 90 outputs error signals, and displays on display section 84 to the effect of abnormality (step S18). Owing to this, when normal reaction is not conducted at reaction sections 124 - 126, it is possible to discontinue inspection and to notify a person in charge of inspection of abnormality. As a result, there is eliminated a fear that an abnormal detection value is judged to be a normal detection value by mistake without being noticed to be abnormal, even when the abnormal detection value is outputted, thus, it is possible to detect accurately. Further, by inspecting again by wiping off dirt on microchip 1, it is possible to reduce loss of precious specimens and to detect failures in their early stages.

In step S14, when the time is judged to conduct detecting (step S14; Yes), CPU 90 limits (reduces) an output current value of heater 32 to be a predetermined value or less (step S15). An occasion where an output of heater 32 is turned off is also included. Namely, the power of heater 32 is reduced or is made to be 0. Owing to this, it is possible to control noises such as electric noise that increases with an increment of output current of heater 32 and fluctuation noise caused by convection of a liquid in a fine channel, which makes it possible to detect accurately.

When the time is judged not to conduct detecting (step S14; No), a flow returns to step S13.

In step S16, CPU 90 judges whether the detection is completed or not. When the detection is judged to have been completed (step S16; Yes), CPU 90 turns off output of heater 32 (step S17) to terminate the flow. When the detection is judged not to have been completed (step S16; No), CPU 90 causes a flow to return to step S16 to be on standby until the detection is completed.

By controlling (reducing) an output current value of heater 32 to be a predetermined value or less in the case of detection, as stated above, in the present embodiment, it is possible to control noises such as electric noise that increases with an increment of output current of heater 32 and fluctuation noise caused by convection of a liquid in a fine channel, which makes it possible to detect accurately.

Further, in the present embodiment, when normal reactions are not carried out in reaction sections 124 - 126, it is possible to discontinue inspection and to notify a person in charge of inspection of abnormality. As a result, there is eliminated a fear that an abnormal detection value is judged to be a normal detection value by mistake without being noticed to be abnormal, even when the abnormal detection value is outputted, thus, it is possible to detect accurately. By inspecting again by wiping off dirt on microchip 1, it is possible to reduce loss of precious specimens and to detect failures in their early stages, in the case of the detection of abnormality.

Though there has been explained an occasion of conducting temperature control regulation (heating) of heater 32 based on temperature sensor for feedback 34, in the foregoing, the same thing also applies basically to an occasion of conducting temperature control regulation (cooling) by using Peltier element 31 based on temperature sensor for feedback 33. Different points will be explained as follows.

Since specimens and reagents tend to be denatured if they are heated, which was mentioned earlier, it is preferable to keep them cooled, except an occasion when they are needed. For that reason, it is preferable that temperature control for Peltier element 31 is started when a power source is applied to inspection device 80 or when the inspection is started. In particular, when a plurality of microchips are inspected continuously, it is more preferable that temperature control for Peltier element 31 is started when a power source is applied, because it is preferable to continue cooling so that reagents may not be denatured.

In case a plurality of temperature adjusting sections are provided as in the present embodiment, it is not always necessary that the aforesaid control is applied to all temperature adjusting sections. With respect to the present embodiment, it is also possible to apply the aforesaid temperature control regulation for heater 32 and to reduce temperature control in the case of detection and to continue ordinary temperature control regulation even in the case of detection for Peltier element 31 so that prevention of denaturation for reagents may be considered preferentially.

In the aforesaid embodiment, there has been explained an example wherein a heater is used when various types of reagents are heated as a temperature adjusting section, and Peltier element is used when cooling reagents. However, when various types of reagents are cooled sufficiently until the moment immediately before the inspection, a temperature adjusting section can be only a heater. Further, it is naturally possible to use also Peltier element for both occasions of heating and cooling various types of reagents as a temperature adjusting section.

## Claims

1. A microchip inspecting device comprising:
a microchip containing part in which a microchip having a part to be detected and a part to be temperature-adjusted is contained;
a detection section provided corresponding to the part to be detected of the microchip contained in the microchip containing part;
a temperature adjusting section provided corresponding to the part to be temperature-adjusted of the microchip contained in the microchip containing part; and
a control section which reduces the power of the temperature adjusting section when the detection section detects the part to be detected of the microchip contained in the microchip containing part.

2. The microchip inspecting device described in claim 1 comprising a plurality of temperature adjusting sections each of which is the temperature adjusting section described in claim 1, wherein the control section reduces the power of at least one of the temperature adjusting sections when the detection section detects the part to be detected of the microchip contained in the microchip containing part

3. The microchip inspecting device described in claim 2, wherein the plurality of the temperature adjusting sections includes a temperature adjusting section for heating and a temperature adjusting section for cooling, and the control section reduces the power of the temperature adjusting section for heating when the detection section detects the part to be detected of the microchip contained in the microchip containing part.

4. The microchip inspecting device described in any one of claims 1 - 3, wherein reducing the power of the temperature adjusting section is reducing the power of the temperature adjusting section to zero.

5. A microchip inspecting device comprising:
a microchip containing part in which a microchip having a part to be detected and a part to be temperature-adjusted is contained;
a detection section provided corresponding to the part to be detected of the microchip contained in the microchip containing part;
a temperature adjusting section provided corresponding to the part to be temperature-adjusted of the microchip contained in the microchip containing part;
a first temperature sensor which is provided, corresponding to the temperature adjusting section, on a same side with the temperature adjusting section with respect to the microchip contained in the microchip containing part, and detects a temperature of a surface on one side of the microchip contained in the microchip containing part;
a control section which controls a temperature of the temperature adjusting section based on an output of the first temperature sensor;
a second temperature sensor that is provided, corresponding to the temperature adjusting section, on an opposite side with the temperature adjusting section with respect to the microchip contained in the microchip containing part, and detects a temperature of a surface of an other side which is different from the one side of the microchip contained in the microchip containing part; and
a control section that outputs a signal indicating whether the detection of the part to be detected of the microchip contained in the microchip containing part conducted by the detection section is abnormal or not, based at least on an output value of the second temperature sensor.

6. The microchip inspecting device described in claim 5, wherein, in case when an output value of the second temperature sensor is not within a target range, an error signal is outputted.

7. The microchip inspecting device described in any one of claims 1 - 6, wherein the temperature adjusting section comprises a Peltier element.

8. The microchip inspecting device described in any one of claims 1 - 6, wherein the temperature adjusting section comprises a heater.
